# FASCICULE DE BREVET EUROPEEN

(11) **EP 2 878 481 B1**
(45) Date de publication et mention de la délivrance du brevet: **16.05.2018**
(21) Numéro de dépôt: 14195088.1
(22) Date de dépôt: 27.11.2014
(51) Int. Cl.: B60N 2/10, B64D 11/06, B60N 2/48

(54) **Siège passager à structure baquet et position ajustable**
Passagiersitz mit Schalensitzstruktur und einstellbarer Position
Passenger seat with bucket structure and adjustable position

(30) Priorité: 29.11.2013 FR 1361857
(43) Date de publication de la demande: 03.06.2015
(73) Titulaire: Stelia Aerospace, 17300 Rochefort (FR)
(72) Inventeur: Texeraud, Laurent, 17220 Clavette (FR); Jerome, Olivier, 17640 Vaux sur Mer (FR); Martin, Gabriel, 17620 Echillais (FR)
(74) Mandataire: Ipside

(56) Documents cités:
- EP-A1- 1 097 864
- DE-A1- 3 822 877
- DE-C1- 19 961 874

## Description

L'invention appartient au domaine des sièges pour véhicule de transport de passagers. Elle concerne plus particulièrement un siège pour une cabine passagers d'un véhicule de transport de passagers par terre, mer ou air. Un tel siège est par exemple installé dans une cabine d'un avion de transport de passager.

De manière générale, un siège utilisé pour le transport de passagers dans une cabine d'un véhicule permet à l'occupant du siège d'en adapter la forme pour répondre à des besoins de confort.

Par exemple il est bien connu de disposer dans les cabines d'avion de sièges dont le dossier comporte plusieurs possibilités d'inclinaison que l'occupant du siège ajuste en fonction de son besoin.

Dans de tels sièges, la présence d'une articulation entre le dossier et l'assise est une complexité pouvant être une source de défaillances et conduit à des renforcements de la structure du siège et à des mécanismes qui augmentent la masse du siège.

Un autre inconvénient du dossier inclinable tient au fait qu'il réduit l'espace disponible à l'arrière du dossier, espace qui est généralement associé au siège du passager situé en arrière du siège considéré.

Dans ce cas, il est connu d'avancer l'assise du siège pour limiter l'emprise du dossier lorsque celui-ci est incliné, mais cette solution augmente encore la complexité et la masse du siège.

Il est également connu du brevet DE 3822877 un siège dont le dossier est fixe par rapport à l'assise et qui est inclinable par un mouvement de rotation à axe déporté de l'ensemble dossier plus assise. Toutefois la solution proposée d'un ensemble dossier plus assise entièrement rigide ne permet pas d'éviter au dossier lorsqu'il est incliné de pénétrer dans un volume arrière du siège, sauf à limiter le mouvement d'inclinaison ou à limiter la hauteur du dossier, solutions qui affectent le confort de l'occupant du siège.

La présente invention a pour objet de remédier à ces inconvénients en simplifiant la structure du siège tout en améliorant le confort du siège.

L'invention vise plus particulièrement un siège de cabine passagers d'un véhicule comportant un baquet, comportant une assise, un dossier fixé à l'assise avec laquelle il détermine un dièdre d'angle constant et un appui-tête fixé au dossier. Le baquet est solidaire d'une embase du siège sur laquelle ledit baquet est mobile, entre une position assis « a » dans laquelle l'assise est sensiblement horizontale et une position repos « r » dans laquelle le dossier est basculé vers l'arrière d'un angle Â par rapport à la position assis « a », en rotation par rapport à l'embase autour d'un axe de basculement, sensiblement fixe par rapport à l'embase, situé au-dessus de l'assise et en avant du dossier lorsque le baquet est dans la position assis « a ».

En outre, l'embase forme un caisson ouvert vers l'avant et enveloppant le baquet, et l'appui-tête est fixé articulé au dossier pour éviter les risques d'interférences avec une structure de l'embase.

Il est ainsi obtenu un siège dont la position du dossier pourvu d'appui-tête et de l'assise sont modifiable avec des efforts réduits et sans extension ou avec une extension limité du dossier et de l'appui-tête vers l'arrière lorsque le siège est basculé dans la position repos.

Dans une forme de réalisation, le baquet comporte un panneau avant solidaire de l'assise dans une partie avant de ladite assise, et fixe par rapport à l'assise, sensiblement vertical lorsque le baquet est dans la position assis « a » et incliné du fait de l'inclinaison du baquet pour permettre à un occupant du siège de reposer une partie inférieure de ses jambes lorsque le baquet est dans la position repos « r ». Il est ainsi obtenu une surface permettant à un occupant du siège de reposer ses jambes lorsque le siège est en position repos et qui ne provoque pas de gêne lorsque le siège est en position assis.

Dans une autre forme de réalisation, le baquet comporte un panneau avant solidaire de l'assise dans une partie avant de l'assise, et articulé par rapport à l'assise, sensiblement vertical lorsque le baquet est dans la position assis « a ».

Ainsi, il est possible de modifier lors du basculement du baquet le profil général du baquet, assise et dossier prolongés par l'appui-tête et le panneau avant utilisé comme surface de repos pour les jambes, pour obtenir une forme plus ergonomique du siège en fonction de la position du baquet et pour éviter des risques d'interférences entre la structure du baquet et la structure de l'embase.

Dans une forme de réalisation, l'axe de basculement est un axe virtuel dont la position est déterminée par la forme d'un ou plusieurs de rails de guidage fixés sur l'embase sur lesquels rails de guidage circulent des galets ou des patins du baquet et ou par la forme d'un ou plusieurs de rails de guidage fixés au baquet sur lesquels rails de guidage circulent des galets ou des patins de l'embase.

L'ensemble des rails de guidage et des galets ou patins, tout en déterminant le balancement du baquet, peut ainsi être intégrés dans les structures de l'embase et du baquet et ainsi être invisibles pour l'occupant du siège. L'occupant est ainsi protégé du risque d'être coincé dans un des rails ou autre élément mécanique et les rails sont eux même protégés de corps étrangers qui pourraient s'introduire accidentellement dans le mécanisme.

Dans une forme de réalisation, l'embase comporte un logement de pieds en partie basse du siège et ouvert vers l'arrière du siège, à l'usage d'un occupant d'un siège situé derrière le siège considéré. Il est ainsi apporté à l'occupant d'un siège situé derrière le siège considéré un volume de confort amélioré, en particulier en position repos, sans qu'il soit nécessaire d'agencer les sièges avec un pas augmenté par rapport à celui nécessaire à la position assis, ou au moins avec une augmentation du pas inférieur à à celui qui serait nécessaire pour maintenir le confort de l'occupant du siège en position repos si un tel logement de pieds n'était pas réalisé.

Dans une forme de réalisation, des moyens ressorts sont agencés entre l'embase et le baquet pour compenser tout ou partie du poids du baquet. Ainsi, lorsque la modification de la position du baquet autour de l'axe de basculement est réalisé de manière musculaire par l'occupant du siège, voire par un personnel commercial de la cabine dans laquelle est installé le siège lors d'une préparation de la cabine, les efforts de passage d'une position du baquet à une autre position, assis, repos ou intermédiaire, s'en trouve facilité en diminuant les efforts nécessaires.

Dans une forme de réalisation, au moins un actionneur est agencé entre l'embase et le baquet pour déplacer ledit baquet par rapport à ladite embase entre les positions assis « a » et repos « r ». Ainsi, sans nécessairement exclure la possibilité de changer la position du baquet de manière musculaire, il est possible à un occupant du siège de changer la position du baquet sans aucun effort particulier.

Dans une forme de réalisation, l'axe de basculement est situé à une distance d'une intersection d'un plan d'assise et d'un plan de dossier de baquet comprise entre 300 mm et 500 mm et est situé en hauteur au-dessus d'un plancher sur lequel est fixé le siège entre 800 mm et 900 mm.

Ainsi le baquet peut être soumis à un mouvement pendulaire tout en obtenant un mouvement essentiellement vertical d'un point arrière du dossier situé à une hauteur proche de la hauteur de l'axe de basculement et évite ou limite l'emprise vers l'arrière du dossier lors des mouvements du baquet.

La description et les dessins d'un mode particulier de réalisation de l'invention, permettront de mieux comprendre les buts et avantages de l'invention. Il est clair que cette description est donnée à titre d'exemple, et n'a pas de caractère limitatif.

Dans les dessins :
- la figure 1 illustre en vue perspective un ensemble de sièges suivant l'invention agencés en deux rangs de deux sièges chacun ;
- la figure 2 illustre en vue perspective de côté un siège isolé de l'invention et son occupant dans la position assis ;
- la figure 3 illustre en vue perspective de côté un siège de l'invention, placé en arrière d'un autre siège, et son occupant dans la position repos ;
- la figure 4 représente schématiquement le déplacement du baquet entre les positions assis et repos par rapport à l'embase ;
- la figure 5 illustre en perspective depuis l'arrière un siège de l'invention, placé en arrière d'un autre siège, et son occupant dans la position repos et illustrant l'arrière d'une embase de siège suivant l'invention.

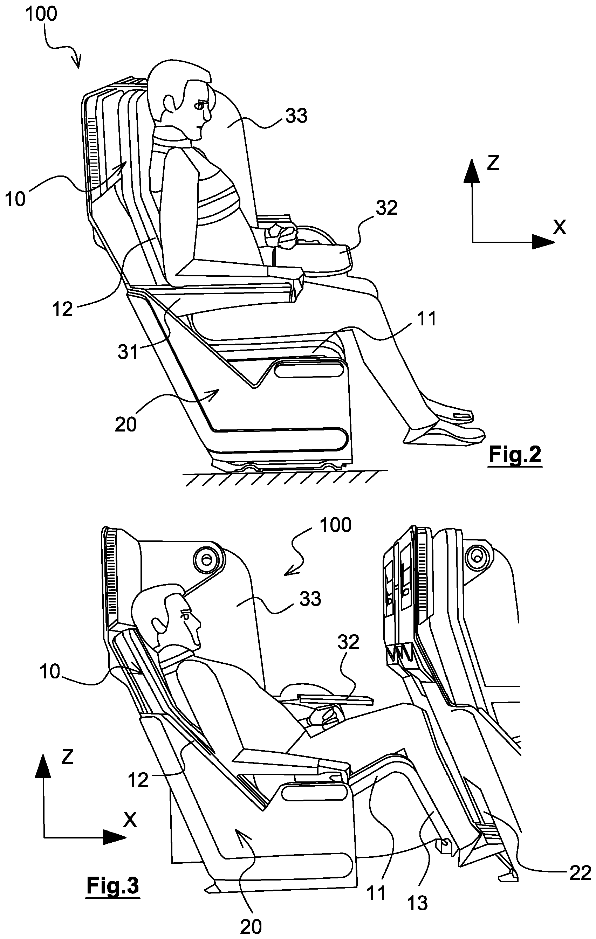

La figure 2 illustre un siège suivant l'invention, isolé, ledit siège étant représenté avec un occupant en position assise.

On utilisera dans la suite de la description un repère siège X, Y, Z pour les axes longitudinaux, transversaux et verticaux du siège. Suivant l'axe longitudinal X, on utilisera les termes « avant », « arrière », « antérieur » et « postérieur », et suivant l'axe vertical Z on utilisera les termes « haut », « bas », « dessus » et « dessous » en utilisant le sens commun qui serait donné par un occupant du siège.

Le siège 100 comporte principalement une embase 20 et un baquet 10.

Le siège 100 comporte également des éléments accessoires comme par exemple, de manière non limitative, des accoudoirs 31, une tablette escamotable 32, une cloison mobile 33 de séparation d'avec un siège voisin...

Le siège 100 est fixé par l'embase 20 à un plancher 40 d'un véhicule, non représenté, de manière conventionnelle, par exemple sur des rails de plancher permettant d'ajuster la position d'un siège dans la cabine lors de l'aménagement de la cabine et en particulier d'agencer des rangs de sièges de sorte à maintenir entre un siège et le siège situé devant une distance de séparation, ou pas des sièges, correspondant à un niveau de confort souhaité pour la cabine.

Le baquet 10 comporte une assise 11 et un dossier 12 prolongé dans une partie supérieure dudit dossier par un appui tête 121 dudit dossier. Une surface de l'assise 11 et une surface du dossier 12 sur lesquelles prend appui un occupant du siège forment un dièdre fixe. Ce dièdre fixe est obtenu par une structure rigide du baquet du siège, structure qui est recouverte de coussins ou matelas pour le confort de l'occupant du siège.

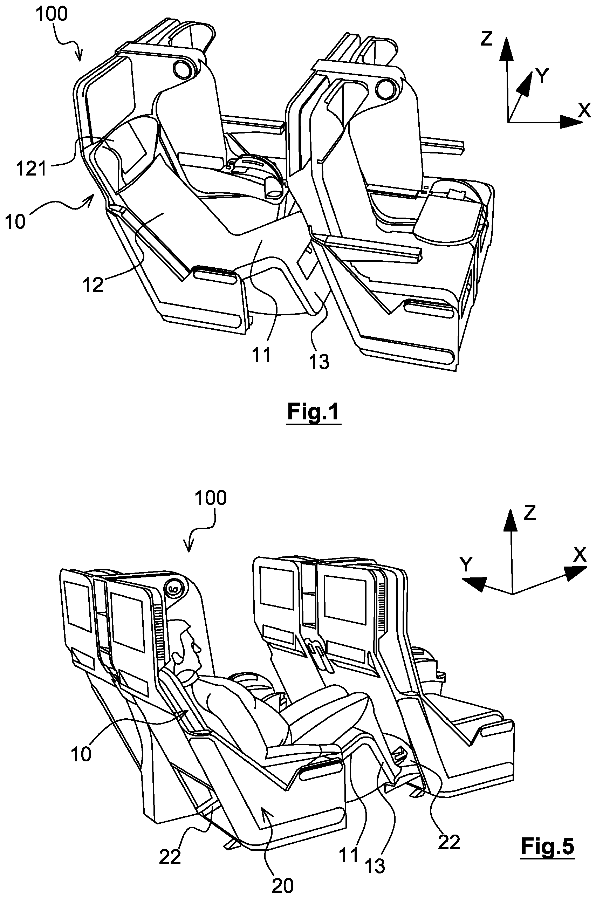

Comme visible sur la figure 1 et sur la figure 2, l'angle du dièdre entre l'assise et le dossier est proche de 100°, de préférence sensiblement supérieur à 100°, par exemple entre 100 et 120°, pour prendre en considération un confort souhaité à la fois dans une position position assis « a » du siège et, comme il sera détaillé ultérieurement, une position repos « r » du siège, sans que cet angle du dièdre soit modifié.

Le baquet 20 présente la forme générale d'un caisson ouvert vers l'avant dans lequel se trouve le baquet 10. Le caisson ouvert, qui peut en pratique avoir diverses formes, sert principalement de structure pour maintenir le baquet et fixer le siège au plancher de la cabine et sert d'enveloppe pour isoler le baquet et l'occupant de l'environnement voisin de la cabine afin de créer une forme d'intimé pour l'occupant.

Le baquet 10 est solidaire de l'embase 20 de manière mobile entre la position assis, illustrée figure 1 sur les sièges avant et figure 2, et la position repos, illustrée figure 1 sur le siège arrière en premier plan et sur la figure 3.

Dans la position assis du baquet, la surface de l'assise 11 est sensiblement horizontale de manière conventionnelle pour un siège et la surface du dossier 12 dans une position redressée correspondant à l'angle de dièdre.

Dans la position repos du baquet, le baquet est incliné vers l'arrière par rapport à la position assis d'un angle Â. Du fait de l'inclinaison du baquet, dans la position repos le dossier 12 est incliné vers l'arrière et l'assise 11 est soulevée à l'avant, suivant la perception de l'occupant du siège.

L'angle Â est avantageusement compris entre 15 degrés et 30 degrés, par exemple un angle compris entre 17 degrés et 28 degrés qui correspond à un angle de confort d'une position de relaxation, valeur de l'angle qui peut cependant être ajustée en fonction du pas avec lequel sont agencés les rangées de sièges se suivant et du niveau de confort apporté à l'occupant du siège.

L'inclinaison du baquet 10 entre les positions assis et repos est obtenu par une rotation du baquet, autour d'un axe de basculement 21 horizontal, c'est-à-dire parallèle à l'axe Y du repère siège, par rapport à l'embase 20.

La position de l'axe de basculement 21 est fixe par rapport à l'embase 20.

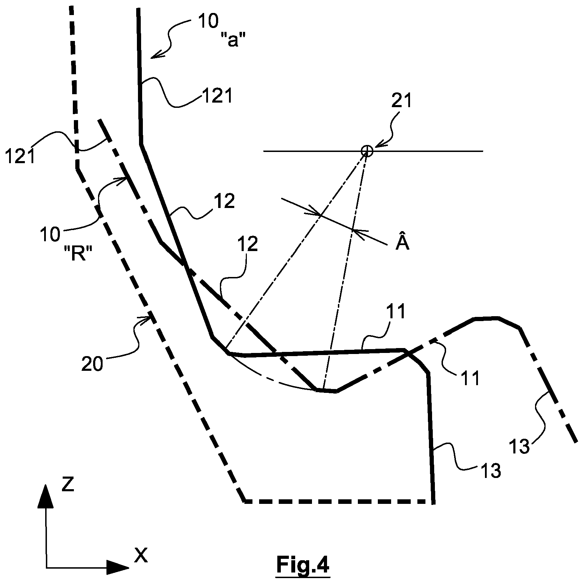

En outre, l'axe de basculement 21 est situé au-dessus de la surface de l'assise 11 et en avant de la surface du dossier 12, comme illustré sur le schéma de principe de la figure 4 sur lequel les formes du baquet 10, en position assis « a » et en position repos « r », et de l'embase 11 sont représentées par un squelette d'une vue de profil du siège.

Avantageusement, en position assis, la position de l'axe de basculement est telle qu'un plan vertical comportant ledit axe de basculement se situe en avant d'une verticale d'un centre de gravité de l'ensemble formé par le baquet et un occupant du siège dans la position conventionnelle d'une personne assise, c'est-à-dire le dos sensiblement contre le dossier du siège.

En position repos, du fait d'un mouvement pendulaire du baquet, la verticale du même centre de gravité se rapproche du plan vertical comportant l'axe de basculement, mais de préférence sans passer devant ce plan vertical.

Ainsi, en libérant le mouvement du baquet lorsqu'il est en position assis, le baquet et son occupant se déplacent vers la position repos, mouvement de préférence amorti par des moyens adaptés, un amortisseur à frottement fluide par exemple, sous le simple effet de la gravité.

Toutefois dans la position repos, lorsque le passager se redresse dans le baquet incliné et se penche vers l'avant, le centre de gravité de l'ensemble formé par le baquet et un occupant du siège passe en avant du plan vertical comportant l'axe de basculement et il est ainsi possible au passager de provoquer un retour vers la position assis, sous réserve que le baquet soit déverrouillé, par le simple effet de la gravité sans qu'il soit indispensable de mettre en oeuvre des actionneurs pour ce mouvement de conversion.

A ce titre il doit être noté qu'un élément ressort permet, le cas échéant, de déplacer la position stable du centre de gravité par rapport à l'axe de basculement, et incidemment de limiter le mouvement vers l'avant du passager pour assurer le retour vers la position assis.

Dans un exemple de réalisation sur la base de dimensions du baquet adaptées à un individu adulte, l'axe de basculement est situé à une distance de l'intersection d'un plan d'assise et d'un plan de dossier de baquet comprise entre 300 mm et 500 mm et est situé en hauteur au-dessus d'un plancher sur lequel est fixé le siège entre 800 MM et 900 mm.

Du fait de la position surélevée de l'axe de basculement 21, un centre de gravité de l'ensemble baquet 10 et occupant du siège se trouve en dessous dudit axe de basculement qui permet le mouvement pendulaire du baquet 10.

Du fait de la position de l'axe de basculement 21, lorsque le baquet 10 est amené de la position assis « a » vers la position repos « r » un point arrière du dossier situé à une hauteur proche de la hauteur de l'axe de basculement 21 décrit un mouvement essentiellement vertical. Une augmentation de l'emprise vers l'arrière du dossier se trouve ainsi limitée, sinon évitée, comme l'illustre la figure 4.

Dans le siège 100, l'axe de basculement 21 est avantageusement un axe virtuel dont la position est déterminée par la forme d'un ou plusieurs de rails de guidage, non représentés sur les figures, fixés sur l'embase 20, sur lesquels rails de guidage circulent des galets ou des patins du baquet 10. Les rails de guidage peuvent également être fixés au baquet et les galets ou patins à l'embase.

Les rails de guidage présentent un cintrage en arc de cercle dont le centre correspond à l'axe de basculement.

Le siège comporte également des moyens de verrouillage, non représentés, par exemple un ou des pions rétractables s'engageant dans des trous ou un système de frein, de la position du baquet 10 de sorte qu'un occupant du siège peut immobiliser le baquet au moins dans la position assis et dans la position repos. Avantageusement les moyens de verrouillage permettent d'immobiliser le baquet dans une ou plusieurs positions intermédiaires entre les positions assis et repos.

Du fait du montage pendulaire du baquet 10, les efforts pour déplacer le baquet se trouvent relativement réduits, en pratique en fonction du sinus d'un angle entre une verticale et la direction déterminée par l'axe de basculement 21 et le centre de gravité de l'ensemble mobile : le baquet seul ou le baquet et l'occupant du siège.

Il est ainsi possible à un occupant du siège en exerçant un effort modéré sur le plancher avec ses pieds et ou sur les accoudoirs avec ses bras, servant de point d'appui, de modifier la position du baquet 10, préalablement déverrouillé. Le cas échéant, des moyens ressorts assurent une compensation partielle des efforts pour replacer le baquet en position assis depuis la position repos ou une position intermédiaire. Avantageusement dans ce cas, les moyens ressorts compensent au moins le poids du baquet 10 de sorte que celui puisse être relevé avec des efforts réduits en absence d'occupant du siège.

Les moyens ressorts sont par exemple des sandows ou des bielles à gaz, ces dernières présentant l'avantage d'incorporer de manière simple une fonction d'amortisseur tant pour une descente vers la position repos que pour éviter une remontée brutale du baquet vers la position assis.

Dans une forme de réalisation, le baquet 10 est mobile au moyen d'un actionneur, par exemple un actionneur électrique, qui par exemple peut être un actionneur linéaire monté sur rotules à ses extrémités solidaires de l'embase d'une part et du baquet d'autre part, ou qui peut être un moteur d'entraînement d'un pignon denté qui engrène une couronne dentée.

Dans une forme de réalisation, le baquet comporte également un panneau avant 13.

Le panneau avant 13 est situé prés d'un bord avant de l'assise 11 et prolonge ladite assise vers le bas.

Lorsque le baquet est dans la position assis, le panneau avant 13 est sensiblement vertical.

Lorsque le baquet est dans la position repos, le panneau avant 13 se trouve incliné comme l'ensemble du baquet avec le même angle par rapport à la position assis et forme dans ce cas une surface sur laquelle un occupant du siège peut poser une partie inférieure de ses jambes.

Un capitonnage du panneau avant 13 améliore au besoin le confort dans la position repos.

Le panneau avant 13 permet également de créer un volume fermé sous l'assise 12 et au besoin incorpore un rangement à la disposition de l'occupant du siège ou pour placer un équipement de sécurité comme par exemple un gilet de sauvetage dans le cas des aéronefs.

En contrepartie d'une embase fixe et du fait que le dossier 12 du siège se déplace peu ou pas vers l'arrière entre les différentes positions du baquet, l'assise 11 est déplacée vers l'avant dans la position repos, diminuant l'espace disponible entre le siège 100 considéré et un siège le précédant dans la cabine.

Cet inconvénient est avantageusement compensé sans nécessité d'augmenter le pas des sièges par la réalisation d'un logement de pieds 22 dans une partie inférieure de l'embase du siège, logement de pieds à l'usage de l'occupant du siège situé immédiatement en arrière du siège considéré comme l'illustrent les figures 3 et 5.

Un tel logement de pieds est possible sans contrainte majeure du fait de la simplicité des éléments mécaniques intégrés dans le siège pour les mouvements du baquet.

En particulier les rails de guidage sont avantageusement agencés prés des bords latéraux du siège de sorte que le volume laissé libre sous l'assise 11, en considérant les déplacements de ladite assise, sont utilisables pour le logement de pieds 22 ou pour d'autres rangements et ou équipements du siège.

L'absence de mouvement de l'embase 20 au niveau de la partie arrière de ladite embase permet d'intégrer simplement des équipements dans ladite embase, par exemple des écrans, mis à la disposition de l'occupant du siège situé derrière le siège considéré.

Diverses variantes sont à la portée de l'homme du métier sans se départir de l'invention.

En particulier, la position de l'axe de basculement qui est fixe dans l'exemple décrit peut être légèrement dépendante de la position du baquet, par exemple par la mise en oeuvre de rails de guidages qui ne sont pas strictement des arcs de cercle, afin d'ajuster la position du baquet et les efforts de déplacement dans les différentes positions. Cependant, dans ce cas le déplacement de l'axe de basculement est limité à quelques centimètres, principalement suivant la direction X avant-arrière, dans le repère de référence du siège, et le baquet reste dans ce cas toujours soumis à un mouvement essentiellement pendulaire assurant une continuité du déplacement et des efforts.

Des parties accessoires du baquet 10 telles que l'appui-tête 121 ou le panneau avant 13 peuvent être montées fixes ou articulées sur le baquet, un appui tête ou un panneau avant articulé, même avec un angle de débattement limité de l'ordre de 10°, pouvant s'avérer utile pour limiter des interférences mécaniques avec la structure de l'embase et ou pour améliorer le confort de l'occupant du siège dans les différentes positions du baquet.

L'invention permet de réaliser un siège d'un confort augmenté par rapport à des sièges ayant un ajustement simple de l'inclinaison du dossier avec une structure mécanique simple et légère, et n'exigeant pas une motorisation du siège.

En outre le confort du passager n'est pas affecté par les réglages choisis par l'occupant du siège situé devant lui sans qu'il soit nécessaire d'augmenter le pas des sièges.

## Revendications

1. Siège (100) de cabine passagers d'un véhicule comportant un baquet (10), ledit baquet comportant une assise (11) et un dossier (12) fixé à ladite assise avec laquelle il détermine un dièdre d'angle constant, un appui-tête (121) fixé audit dossier, dans lequel le baquet (10) est solidaire d'une embase (20), ledit baquet étant mobile, entre une position assis « a » dans laquelle l'assise (11) est sensiblement horizontale et une position repos « r » dans laquelle le dossier (12) est basculé vers l'arrière d'un angle Â par rapport à la position assis « a », en rotation par rapport à ladite embase autour d'un axe de basculement (21), sensiblement fixe par rapport à ladite embase, situé au-dessus de l'assise (11) et en avant du dossier (12) lorsque le baquet est dans la position assis « a », **caractérisé en ce que** l'embase (20) forme un caisson ouvert vers l'avant et enveloppant le baquet, et **en ce que** l'appui tête (121) est fixé articulé au dossier (12) pour éviter les risques d'interférences avec une structure de l'embase (20).

2. Siège suivant la revendication 1 dans lequel le baquet (10) comporte un panneau avant (13) solidaire de l'assise (11) dans une partie avant de ladite assise, et fixe par rapport à la dite assise, sensiblement vertical lorsque le baquet est dans la position assis « a » et incliné du fait de l'inclinaison du baquet pour permettre à un occupant du siège de reposer une partie inférieure de ses jambes lorsque le baquet est dans la position repos « r ».

3. Siège suivant la revendication 1 dans lequel le baquet (10) comporte un panneau avant (13) solidaire de l'assise (11) dans une partie avant de ladite assise, et articulé par rapport à la dite assise, sensiblement vertical lorsque le baquet est dans la position assis « a ».

4. Siège suivant l'une des revendications 1 à 3 dans lequel l'axe de basculement (21) est un axe virtuel dont la position est déterminée par la forme d'un ou plusieurs rails de guidage fixés sur l'embase (20) sur lesquels rails de guidage circulent des galets ou des patins du baquet (10) et ou par la forme d'un ou plusieurs rails de guidage fixés au baquet (10) sur lesquels rails de guidage circulent des galets ou des patins de l'embase (20).

5. Siège suivant l'une des revendications précédentes dans lequel l'embase (20) comporte un logement de pieds (22) en partie basse du siège et ouvert vers l'arrière du siège, à l'usage d'un occupant d'un siège situé derrière le siège considéré.

6. Siège suivant l'une des revendications précédentes dans lequel des moyens ressorts sont agencés entre l'embase (20) et le baquet (10) pour compenser tout ou partie du poids du baquet (10).

7. Siège suivant l'une des revendications précédentes dans lequel au moins un actionneur est agencé entre l'embase (20) et le baquet (10) pour déplacer ledit baquet par rapport à ladite embase entre les positions assis « a » et repos « r ».

8. Siège suivant l'une des revendications précédentes dans lequel l'axe de basculement (21) est situé à une distance d'une intersection d'un plan d'assise et d'un plan de dossier de baquet comprise entre 300 mm et 500 mm et est situé en hauteur au-dessus d'un plancher sur lequel est fixé le siège entre 800 mm et 900 mm.

## Patentansprüche

1. Sitz (100) der Passagierkabine eines Fahrzeugs, umfassend einen Schalensitz (10), wobei der Schalensitz eine Sitzfläche (11) und eine Rückenlehne (12) umfasst, die an die Sitzfläche fixiert ist, mit der er einen Dieder mit konstantem Winkel bestimmt, eine Kopfstütze (121), die an die Rückenlehne fixiert ist, wobei der Schalensitz (10) mit einer Basis (20) fest verbunden ist, wobei der Schalensitz zwischen einer Sitzposition "a", in der die Sitzfläche (11) im Wesentlichen horizontal ist, und einer Ruheposition "r" beweglich ist, wobei die Rückenlehne (12) nach hinten um einen Winkel Ä mit Bezug auf die Sitzposition "a" in Rotation mit Bezug auf die Basis um eine Kippachse (21) gekippt wird, die mit Bezug auf die Basis im Wesentlichen fixiert ist, die sich über der Sitzfläche (11) und vor der Rückenlehne (12) befindet, wenn sich der Schalensitz in der Sitzposition "a" befindet, **dadurch gekennzeichnet, dass** die Basis (20) eine Box bildet, die nach vorne geöffnet ist und den Schalensitz umschließt, und dadurch, dass die Kopfstütze (121) gelenkig an die Rückenlehne (12) fixiert ist, um die Risiken von Interferenzen mit einer Struktur der Basis (20) zu verhindern.

2. Sitz nach Anspruch 1, wobei der Schalensitz (10) eine vordere Platte (13) umfasst, die mit der Sitzfläche (11) in einem vorderen Teil der Sitzfläche fest verbunden und mit Bezug auf die Sitzfläche im Wesentlichen vertikal fixiert ist, wenn sich der Schalensitz in der Sitzposition "a" befindet und aufgrund der Neigung des Schalensitzes geneigt ist, um einem Benutzer des Sitzes zu ermöglichen, einen unteren Teil seiner Beine aufliegen zu lassen, wenn sich der Schalensitz in der Ruheposition "r" befindet.

3. Sitz nach Anspruch 1, wobei der Schalensitz (10) eine vordere Platte (13) umfasst, die mit der Sitzfläche (11) in einem vorderen Teil der Sitzfläche fest verbunden und mit Bezug auf die Sitzfläche im Wesentlichen vertikal gelenkig verbunden ist, wenn sich der Schalensitz in der Sitzposition "a" befindet.

4. Sitz nach einem der Ansprüche 1 bis 3, wobei die Kippachse (21) eine virtuelle Achse ist, deren Position durch die Form einer oder mehrerer Führungsschienen bestimmt wird, die auf der Basis (20) fixiert sind, wobei sich auf den Führungsschienen Rollen oder Schlitten des Schalensitzes (10) bewegen, und durch die Form einer oder mehrerer Führungsschienen, die an den Schalensitz (10) befestigt sind, wobei sich auf den Führungsschienen Rollen oder Schlitten der Basis (20) bewegen.

5. Sitz nach einem der vorstehenden Ansprüche, wobei die Basis (20) eine Aufnahme von Füßen (22) am unteren Teil des Sitzes umfasst und zur hinteren Seite des Sitzes hin offen ist, zur Verwendung eines Benutzers eines Sitzes, der sich hinter dem in Betracht gezogenen Sitz befindet.

6. Sitz nach einem der vorstehenden Ansprüche, wobei Federmittel zwischen der Basis (20) und dem Schalensitz (10) angeordnet sind, um die Gesamtheit oder einen Teil des Gewichts des Schalensitzes (10) zu kompensieren.

7. Sitz nach einem der vorstehenden Ansprüche, wobei mindestens eine Betätigungsvorrichtung zwischen der Basis (20) und dem Schalensitz (10) angeordnet ist, um den Schalensitz mit Bezug auf die Basis zwischen der Sitzposition "a" und der Ruheposition "r" zu verschieben

8. Sitz nach einem der vorstehenden Ansprüche, wobei sich die Kippachse (21) in einem Abstand von einer Schnittstelle einer Sitzflächenebene und einer Rückenlehnenebene des Schalensitzes befindet, die zwischen 300 mm und 500 mm liegt, und sich in einer Höhe über einem Boden, auf dem der Sitz fixiert ist, zwischen 800 mm und 900 mm befindet.

## Claims

1. Seat (100) of the passenger cabin of a vehicle comprising a bucket (10), said bucket comprising a seat (11) and a backrest (12) fastened to said seat with which it determines a constant dihedral angle, a headrest (121) fastened to said backrest, wherein the bucket (10) is integral with a base (20), said bucket being mobile, between a seated position "a" wherein the seat (11) is substantially horizontal and a resting position "r" wherein the backrest (12) is tilted towards the rear by an angle Â in relation to the seated position "a", in rotation in relation to said base about a tilting axis (21), substantially fixed in relation to said base, located above the seat (11) and in front of the backrest (12) when the bucket is in the seated position "a", **characterised in that** the base (20) forms a box opened frontwards and surrounding the bucket, and **in that** the headrest (121) is fastened articulated to the backrest (12) in order to prevent the risks of interference with a structure of the base (20).

2. Seat according to claim 1 wherein the bucket (10) comprises a front panel (13) secured to the seat (11) in a front portion of said seat, and fixed in relation to said seat, substantially vertical when the bucket is in the seated position "a" and inclined due to the inclination of the bucket in order to allow an occupant of the seat to rest a lower portion of their legs when the bucket is in the resting position "r".

3. Seat according to claim 1 wherein the bucket (10) comprises a front panel (13) secured to the seat (11) in a front portion of said seat, and articulated in relation to said seat, substantially vertical when the bucket is in the seated position "a".

4. Seat according to one of claims 1 to 3 wherein the tilting axis (21) is a virtual axis of which the position is determined by the form of one or several guide rails fastened onto the base (20) whereon guide rails circulate rollers or glides of the bucket (10) and or by the form of one or several guide rails fastened to the bucket (10) whereon guide rails circulate rollers or glides of the base (20).

5. Seat according to one of the preceding claims wherein the base (20) comprises a foot housing (22) in the bottom portion of the seat and open towards the rear of the seat, for the use of an occupant of a seat located behind the seat under consideration.

6. Seat according to one of the preceding claims wherein spring means are arranged between the base (20) and the bucket (10) in order to offset all or a portion of the weight of the bucket (10).

7. Seat according to one of the preceding claims wherein at least one actuator is arranged between the base (20) and the bucket (10) in order to move said bucket in relation to said base between the seated "a" and resting "r" positions.

8. Seat according to one of the preceding claims wherein the tilting axis (21) is located at a distance from an intersection of a bucket seat plane and a backrest plane between 300mm and 500mm and is located at a height above a floor whereon is fastened the seat between 800mm and 900mm.
